# EUROPEAN PATENT APPLICATION

(11) **EP 2 957 990 A1**
(43) Date of publication of application: **23.12.2015**
(21) Application number: 15162503.5
(22) Date of filing: 02.04.2015
(51) Int. Cl.: G06F 3/01, G06F 1/16, G06F 17/28

(54) **DEVICE AND METHOD FOR AUTOMATIC TRANSLATION**

(30) Priority: 18.06.2014 KR 20140074509
(71) Applicant: Samsung Electronics Co., Ltd, Gyeonggi-do 443-742 (KR)
(72) Inventor: Kwon, O-Kon, Seoul (KR)
(74) Representative: Appleyard Lees

(57) **Abstract**

A portable device and a method for automatic translation are provided. The portable device and method for automatic translation include an inclination detector configured to detect an inclination of the portable device, a user input receiver configured to receive a user input, a processor configured to set an input language based on a direction of the inclination of the portable device and to translate the user input into an output language, and an output unit configured to output a result of translating the user input into the output language.

## Description

### CROSS-REFERENCE TO RELATED APPLICATION(S)

This application claims the benefit under 35 U.S.C. § 119(a) of a Korean patent application filed on June 18, 2014 in the Korean Intellectual Property Office and assigned Serial number 10-2014-0074509, the entire disclosure of which is hereby incorporated by reference.

### TECHNICAL FIELD

The present disclosure relates to a device and method for automatic translation. More particularly, the present disclosure relates to an automatic translation using a portable device.

### BACKGROUND

When a translation function installed in a portable device is used, an input language, which is a translation target, and an output language should be set to perform the translation function. In particular, when a translation function is used to have a conversation among users who use a plurality of languages, an input language and an output language of a portable device should be changed each time by manipulating buttons. Thus, it is inconvenient to freely have a conversation among the users. Also, settings for automatic translation among three or more languages are difficult to set using a portable device.

Furthermore, when users who use a plurality of languages have a conversation using an automatic translation system installed in a portable device, it would be inconvenient for all the users to have a conversation while simultaneously viewing a translation result displayed on a screen.

Accordingly, there is a need to develop a technique of easily setting an input language and an output language, and conveniently using an automatic translation function even users use three or more languages.

The above information is presented as background information only to assist with an understanding of the present disclosure. No determination has been made, and no assertion is made, as to whether any of the above might be applicable as prior art with regard to the present disclosure.

### SUMMARY

Aspects of the present disclosure are to address at least the above-mentioned problems and/or disadvantages and to provide at least the advantages described below. Accordingly, an aspect of the present disclosure is to provide an automatic translation using a portable device.

Another aspect of the present disclosure is directed to easily setting a language which is a translation target.

Another aspect of the present disclosure is directed to changing an input language and an output language without manipulating buttons when users who use a plurality of different languages have a conversation.

Another aspect of the present disclosure is directed to easily changing an input language even when users use three or more languages, and to translating a conversation among the users who use three or more languages on divisional regions of a screen.

Another aspect of the present disclosure is directed to enabling all users to have a conversation in an easy and simple manner while simultaneously viewing a translation result displayed on a screen.

Additional aspects will be set forth in part in the description which follows and, in part, will be apparent from the description, or may be learned by practice of the various embodiments of the present disclosure.

In accordance with an aspect of the present disclosure, a portable device is provided. The portable device includes an inclination detector configured to detect an inclination of the portable device, a user input receiver configured to receive a user input, a processor configured to set an input language based on a direction of the inclination of the portable device, and to translate the user input into an output language, and an output unit configured to output a result of translating the user input into the output language.

In accordance with another aspect of the present disclosure, a translation method for use in a portable device is provided. The translation method includes detecting an inclination of the portable device, setting an input language based on a direction of the inclination of the portable device, translating a user input received via a user input receiver into an output language, and outputting a result of translating the user input into the output language to an output unit.

In accordance with an aspect of the present disclosure, a computer-readable recording medium having recorded thereon a program for performing the above method is provided.

Other aspects, advantages, and salient features of the disclosure will become apparent to those skilled in the art from the following detailed description, which, taken in conjunction with the annexed drawings, discloses various embodiments of the present disclosure.

### BRIEF DESCRIPTION OF THE DRAWINGS

The above and other aspects, features, and advantages of certain embodiments of the present disclosure will be more apparent from the following description taken in conjunction with the accompanying drawings, in which:
FIG. 1 is a block diagram of a portable device according to an embodiment of the present disclosure;
FIG. 2 is a flowchart of a translation method for use in a portable device according to an embodiment of the present disclosure;
FIG. 3 is a diagram illustrating a translation method for use in a portable device according to an embodiment of the present disclosure;
FIG. 4 is a diagram illustrating a translation method for use in a portable device according to an embodiment of the present disclosure;
FIG. 5 is a flowchart of a translation method for use in a portable device according to an embodiment of the present disclosure;
FIGS. 6A and 6B are diagrams illustrating a relationship between a direction of an inclination of a portable device and a user input according to various embodiments of the present disclosure;
FIG. 7 is a diagram illustrating a plurality of divisional regions of a display unit of a portable device according to an embodiment of the present disclosure;
FIG. 8 is a diagram illustrating a plurality of divisional regions of a display unit of a portable device according to an embodiment of the present disclosure;
FIGS. 9A and 9B are diagrams illustrating a translation method for use in a portable device according to various embodiments of the present disclosure;
FIG. 10 is a flowchart of a translation method for use in a portable device according to an embodiment of the present disclosure; and
FIG. 11 is a block diagram of a portable device according to an embodiment of the present disclosure.

Throughout the drawings, it should be noted that like reference numbers are used to depict the same or similar elements, features, and structures.

### DETAILED DESCRIPTION

The following description with reference to the accompanying drawings is provided to assist in a comprehensive understanding of various embodiments of the present disclosure as defined by the claims and their equivalents. It includes various specific details to assist in that understanding but these are to be regarded as merely exemplary. Accordingly, those of ordinary skill in the art will recognize that various changes and modifications of the various embodiments described herein can be made without departing from the scope and spirit of the present description. In addition, descriptions of well-known functions and constructions may be omitted for clarity and conciseness.

The terms and words used in the following description and claims are not limited to the bibliographical meanings, but, are merely used by the inventor to enable a clear and consistent understanding of the present disclosure. Accordingly, it should be apparent to those skilled in the art that the following description of various embodiments of the present disclosure is provided for illustration purpose only and not for the purpose of limiting the present disclosure as defined by the appended claims and their equivalents.

It is to be understood that the singular forms "a," "an," and "the" include plural referents unless the context clearly dictates otherwise. Thus, for example, reference to "a component surface" includes reference to one or more of such surfaces.

As used herein, the term "and/or" includes any and all combinations of one or more of the associated listed items. Expressions such as "at least one of," when preceding a list of elements, modify the entire list of elements and do not modify the individual elements of the list.

It will be understood that when an element or layer is referred to as being "connected to" another element or layer, the element or layer should be understood as being directly connected to another element or layer or being electrically connected to another element or layer with intervening elements or layers therebetween. In contrast, when an element is referred to as being "directly on" another element or layer, there are no intervening elements or layers present. It will be further understood that the terms "comprise" and/or "comprising," when used in this specification, specify the presence of stated features, integers, steps, operations, elements, and/or components, but do not preclude the presence or addition of one or more other features, integers, steps, operations, elements, components, and/or groups thereof.

Hereinafter, various embodiments of the present disclosure will be described in detail with reference to the accompanying drawings.

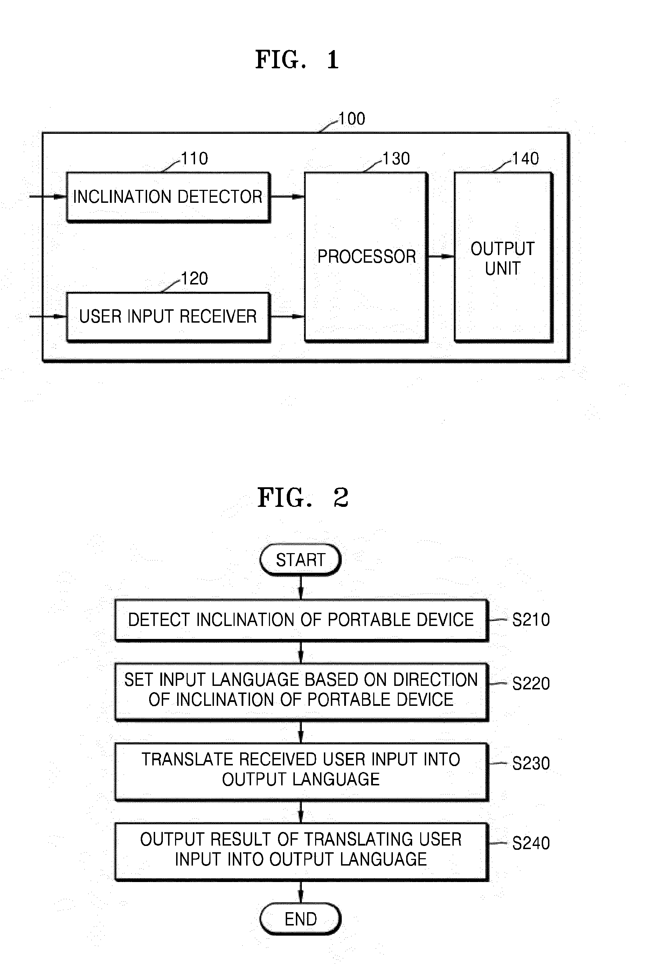

FIG. 1 is a block diagram of a portable device according to an embodiment of the present disclosure.

Referring to FIG. 1, a portable device 100, according to an embodiment of the present disclosure, includes an inclination detector 110, a user input receiver 120, a processor 130, and an output unit 140. The portable device 100 may include, for example, a smartphone, a tablet personal computer (PC), etc., but is not limited thereto.

The inclination detector 110 detects an inclination of the portable device 100. The inclination detector 110 may be a sensor included in the portable device 100, e.g., a gyro sensor and/or any other similar and/or suitable sensor that senses an inclination of a device. When the gyro sensor is installed in the portable device 100, the gyro sensor may measure angular speeds of the portable device 100 with respect to X, Y, and Z axes to set a location and direction of the portable device 100. Thus, the gyro sensor is capable of detecting the inclination of the portable device 100. The gyro sensor is merely an example of the inclination detector 110 and the inclination detector 110 may be embodied in different forms including an acceleration sensor, etc.

The user input receiver 120 receives a user input for the portable device 100. The user input may be various types of inputs that can be generated and/or received by a user. For example, the user input may be, but is not limited to, texts, voice, a touch input, etc. Also, the user input receiver 120 may include, but is not limited to, for example, at least one among a microphone, a touch screen, a touch sensor, a touch pad, a keyboard, and key buttons.

The processor 130 sets an input language based on a direction of the inclination of the portable device 100 detected by the inclination detector 110, and translates the user input received via the user input receiver 120 into an output language.

According to an embodiment of the present disclosure, the processor 130 may receive a user input in Korean via the user input receiver 120 while detecting the inclination of the portable device 100 in a first direction. In this case, the processor 130 may set Korean as an input language based on the inclination of the portable device 100 in the first direction. Also, the processor 130 may receive a user input in English via the user input receiver 120 while detecting the inclination of the portable device 100 in a second direction. In this case, the processor 130 may set English as an input language based on the inclination of the portable device 100 in the second direction.

According to an embodiment of the present disclosure, the processor 130 may display a user interface (UI) for selecting a language on the output unit 140 when the inclination of the portable device 100 in the first direction is detected. In this case, a user may select an input language via the UI, and the processor 130 sets the selected language as an input language.

Similarly, the processor 130 may display the UI for selecting a language on the output unit 140 when the inclination of the portable device 100 is detected. A user may select an input language via the UI and the processor 130 may set the selected language as an input language.

According to various embodiments of the present disclosure, an output language may be additionally selected.

The output unit 140 outputs a result of translation into an output language, which is performed by the processor 130. The output unit 140 may output the result of translation into the output language in the form of voice, texts, etc. For example, the output unit 140 may be a speaker, a display, or the like included in the portable device 100 but is not limited thereto.

Here, the 'input language' should be understood as a language which is a translation target input by a user, i.e., the 'input language' may be a language that is to be translated into another language, such as the 'output language', and the 'output language' should be understood as a language into which the input language is translated and output. For example, the input language may be Korean and the output language may be English.

FIG. 2 is a flowchart of a translation method for use in a portable device according to an embodiment of the present disclosure.

According to an embodiment of the present disclosure, the translation method of FIG. 2 may be performed by the portable device 100 of FIG. 1. However, various embodiments of the present disclosure are not limited by the portable device 100 of FIG. 1 and may be performed by various portable devices.

Referring to FIGS. 1 and 2, in a translation method according to an embodiment of the present disclosure, the inclination detector 110 detects the inclination of the portable device 100 in operation S210.

Next, the processor 130 sets an input language based on the direction of the inclination of the portable device 100 detected in operation S210 in operation S220.

Next, the processor 130 translates a user input received via the user input receiver 120 into an output language in operation S230.

Next, in operation S240, the output unit 140 outputs a result of translating the user input into the output language in operation S230.

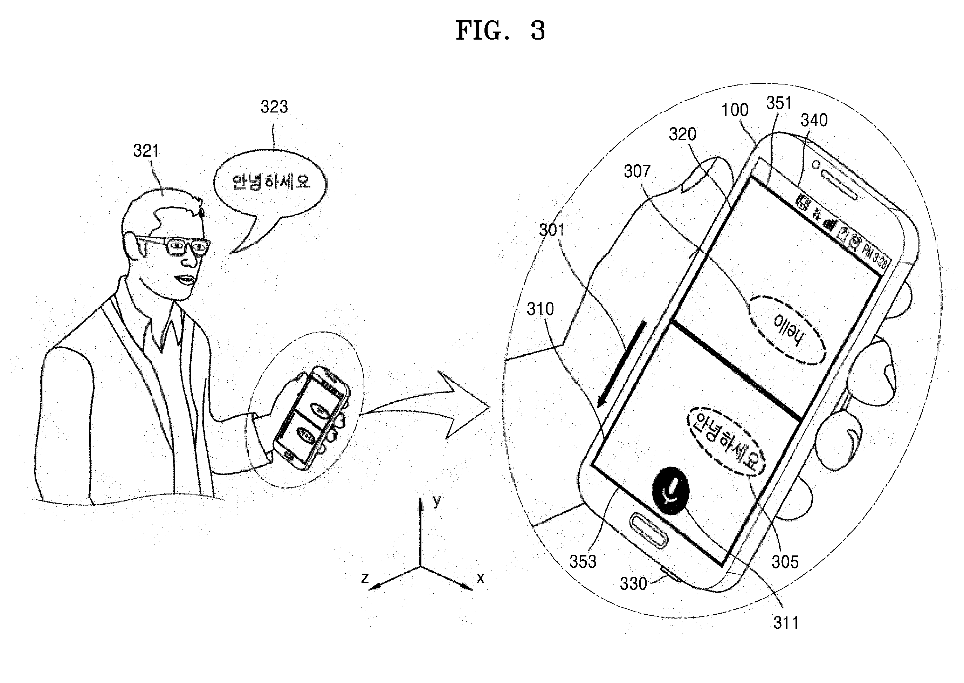

A translation method for use in the portable device 100 according to an embodiment of the present disclosure will be described in more detail with reference to FIG. 3 below.

FIG. 3 is a diagram illustrating a translation method for use in a portable device 100 according to an embodiment of the present disclosure.

Referring to FIG. 3, a smartphone is displayed as an example of the portable device 100 for convenience of explanation but various embodiments of the present disclosure are not limited thereto.

In FIG. 3, a first direction 301 displayed in the form of an arrow on a display unit 340 of the portable device 100 represents the direction of the inclination of the portable device 100.

The processor 130 may set an input language based on the inclination of the portable device 100 detected by the inclination detector 110. In detail, the processor 130 may set a first language as an input language when the inclination detector 110 detects the inclination of the first direction 301 on the portable device 100. Although FIG. 3 illustrates a case in which the first language is Korean, the first language is not limited to Korean.

Here, a point of time when the inclination detector 110 of the portable device 100 starts an inclination detection function may be, for example, a point of time when an application for performing an automatic translation method for use in the portable device 100 is activated or a point of time when an input instructing to start the inclination detection function is input to the inclination detector 110 of the portable device 100. For example, the input instructing to start the inclination detection function may be an input instructing to detect an angular speed on the portable device 100 that is equal to or greater than a predetermined angular speed. As another example, the input instructing to start the inclination detection function may be a touch input performed by touching an icon 311 displayed on the display unit 340. However, various embodiments of the present disclosure are not limited thereto and any suitable and/or similar process, method, and/or element may be used to start the inclination detection function.

The direction of the inclination of the portable device 100 may be, for example, a direction represented by a straight light toward the center of a bottom end 353 from the center of a top end 351 of the portable device 100. In FIG. 3, the first direction 301 represents the direction of the inclination of the portable device 100. The first direction 301 may be a direction in which the portable device 100 is tilted such that the top end 351 of the portable device 100 is more distant from the ground than the bottom end 353 so that the display unit 340 may face a first user 321.

The detecting of the direction of the inclination of the portable device 100 by the inclination detector 110 of the portable device 100 should be understood as including detecting the angle of the inclination of the portable device 100 on an xz plane.

The angle of the inclination of the portable device 100 may be, for example, the angle formed by the straight line toward the center of the bottom end 353 of the display unit 340 from the center of the top end 351 and the ground, i.e., the xy plane of FIG. 3. FIG. 3 illustrates a case in which the angle of the inclination of the portable device 100 is 45 degrees while a first user 321 grabs the portable device 100 in his/her hand.

According to an embodiment of the present disclosure, the inclination detector 110 may detect the inclination of the portable device 100 as the first direction 301 when the angle of the inclination of the portable device 100 is 45 degrees, and also when the angle of the inclination of the portable device 100 is in a predetermined error range.

FIG. 3 illustrates a case in which a voice input is input toward the user input receiver 330 of the portable device 100 while the first user 321 grabs the portable device 100 in his/her hand. According to the present embodiment of the present disclosure, a user input receiver 330, which may be similar to the user input receiver 120 shown in FIG. 1, may be a microphone and a user input 323 may be a voice input received via the microphone that is the user input receiver 330. In this case, the user input receiver 330 may receive the user input 323 that is in the form of voice, and a content recognized by the user input receiver 330 may be displayed in the form of texts on the display unit 340.

According to an embodiment of the present disclosure, the user input receiver 330 may receive a text input via a graphical user interface (GUI) of a virtual keyboard on a touch screen.

According to an embodiment of the present disclosure, the user input receiver 330, which may be and/or include a touch screen, may receive a gesture input performed by touching a location on the touch screen.

A first region 310 and a second region 320 of the display unit 340 of FIG. 3 are divisional regions of the display unit 340 for translation when users have a conversation using two languages. Here, the divisional regions of the display unit 340 correspond to a plurality of input languages, respectively, when the plurality of input languages are set. As illustrated in FIG. 3, the divisional regions may be the first region 310 and the second region 320 but are not limited thereto.

Referring to FIG. 3, a user input may be displayed in a first language on the first region 310. That is, a text 305 of the user input 323, e.g., ' 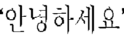 ' which is a Korean expression corresponding to 'hello', may be displayed on the first region 310.

An upward direction and a downward direction of the text 305 displayed on the first region 310 of the display unit 340 are determined based on the first direction 301. That is, the upward and downward directions of the text 305 displayed on the first region 310 of the display unit 340 may be determined as the first direction 301 based on the user input 323 received while the inclination of the portable device 100 is tilted in the first direction 301 by the first user 321.

A result of translating the user input 323 into an output language may be output via the output unit 140. When the output unit 140 includes the display unit 340, a result of translating 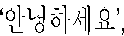 , which is the user input 323, into the output language through the processor 130 may be displayed in the form of text on the second region 320 of the display unit 340. Referring to FIG. 3, the result of translating ' 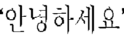 ', which is the user input 323, into English as the output language is displayed as 'Hello' in the form of a text 307 on the second region 320 of the display unit 340. As another example, when the output unit 140 is a speaker (not shown), the result of translating ' 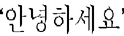 ', which is the user input 323, into English as the output language may be output 'Hello' in the form of voice. As another example, the result of translating the user input 323 into English as the output language may be output in the form of both as the text 307 and voice. The output language is not limited to English and may be Korean, Chinese, French, German, etc.

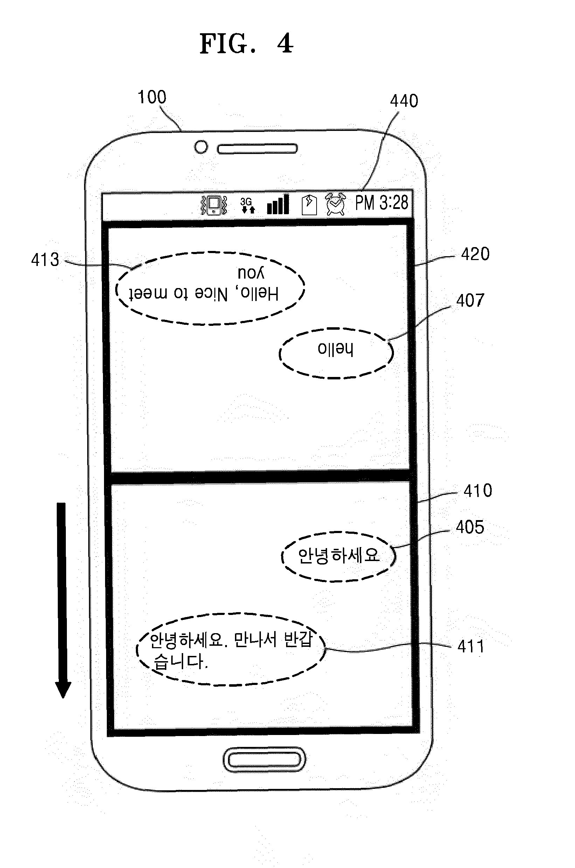

FIG. 4 is a diagram illustrating a translation method for use in a portable device according to an embodiment of the present disclosure.

Referring to FIG. 4, parts of the translation method that are the same as those of the translation method of FIG. 3 are not redundantly described here, and the translation method of FIG. 4 will be described focusing on the differences from the translation method of FIG. 3.

When two input languages are set and a conversation is held using the two input languages, divisional regions of a display unit 440 may be a first region 410 and a second region 420.

The output unit 140 of FIG. 1, which may include the display unit 440, may display a user input received in a first language and a result of translation into the first language in the form of texts on the first region 410 among the divisional regions of the display unit 440. For example, the first language may be Korean.

Referring to FIG. 4, when the output unit 140 includes the display unit 440, a user input, which is input in the first language, e.g., Korean, may be displayed as ' 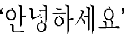 ' corresponding to the user input in the form of text 405 on the first region 410 of the display unit 440. Also, a result of translating a user input received in an input language other than Korean into Korean may be displayed in the form of text on the first region 410. For example, when a user input received in English is 'Hello, nice to meet you', ' 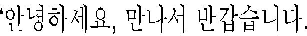 ' which is a result of translating the user input into Korean, may be displayed in the form of a text 411 on the first region 410.

A result of translating a user input of a second user (not shown) into Korean may be displayed in the form of the text 411 below the text 405 of ' 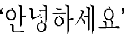 ' corresponding to a user input which is input by a first user (not shown). Thus, texts may be displayed in the form of conversation on the first region 410.

Similarly, when the output unit 140 includes the display unit 440, a user input received in the second language and a result of translation into the second language may be may be displayed in the form of text on the second region 410 among the regions of the display unit 440. For example, the second language may be English.

Referring to FIG. 4, a result of translating a user input into the second language, the user input received in a language other than the second language may be displayed in the form of text on the second region 420 of the display unit 440. For example, the user input received in an input language other than the second language may be ' 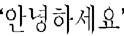 ', which is Korean. 'Hello', which is a result of translating ' 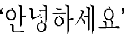 ' into the second language, e.g., English, may be displayed in the form of text 407 on the second region 420. When a user input received in the second language, e.g., English, is 'Hello, nice to meet you', a text 413 corresponding to the user input may be displayed on the second region 420.

The text 413 of 'Hello, nice to meet you' 413, corresponding to a user input that is input by the second user, may be displayed below the text 407 of 'Hello', which is the result of translating the user input that is input by the first user into English. Thus, texts may be displayed in the form of a conversation on the second region 420.

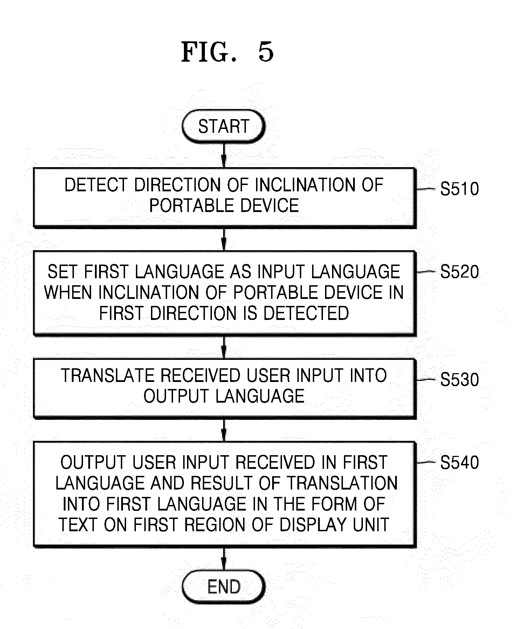

FIG. 5 is a flowchart of a translation method for use in a portable device according to an embodiment of the present disclosure.

Referring to FIG. 5, the translation method may be performed by the portable device 100 of FIG. 1.

Referring to FIGS. 1 and 5, in the translation method according to an embodiment of the present disclosure, the inclination detector 110 detects a direction of the inclination of the portable device 100 in operation S510.

Next, the processor 130 sets a first language as an input language when the inclination of the portable device 100 in the first direction is detected in operation S510 in operation S520.

Next, the processor 130 translates a user input received via the user input receiver 120 of the portable device 100 into an output language in operation S530.

Next, the output unit 140 outputs a user input received in the first language and a result of translating a user input received in a second language into the first language in operation S530 in the form of text on the first region, among the divisional regions, of the display unit in operation S540.

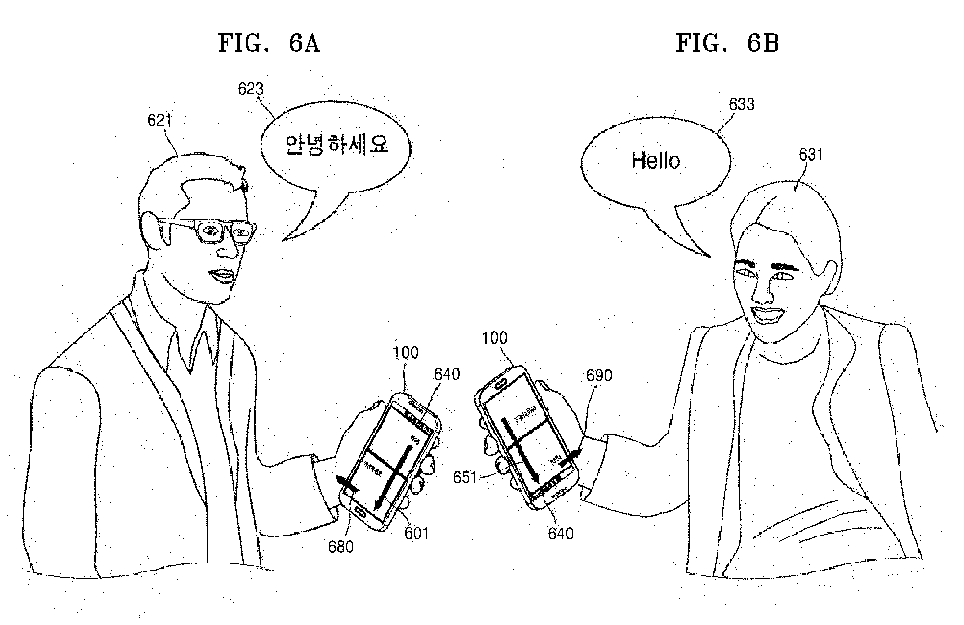

FIGS. 6A and 6B are diagrams illustrating a relationship between a direction of an inclination of a portable device and a user input according to various embodiments of the present disclosure.

Referring to FIGS. 6A and 6B, the direction of an inclination corresponding to an input language may correspond to a direction in which a display unit 640, which may be included in the output unit 140, of the portable device 100 faces a user who inputs the input language.

First, referring to FIG. 6A, a first user 621 who inputs a user input 623, which is ' 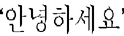 ' in Korean, sets Korean as an input language based on a first direction 601 of the portable device 100.

When the direction of the inclination of the portable device 100 is the first direction 601, the display unit 640 of the portable device 100 may be disposed in a direction 680 facing the first user 621, who inputs Korean as the input language, as illustrated in FIG. 6A.

FIG. 6B illustrates a second user 631 who has a conversation with the first user 621 of FIG. 6A. As illustrated in FIG. 6B, when the second user 621 inputs a user input 633, which is 'Hello' in English, the processor 130 of FIG. 1 may set English as an input language based on the inclination of the portable device 100 in a second direction 651.

FIG. 6B illustrates a direction 690 in which the display unit 640 of the portable device 100 faces the second user 631, who inputs English as an input language, when the direction of the inclination of the portable device 100 is the second direction 651.

The processor 130 may set a first language based on a predetermined input word received while the inclination of the first direction 601 is detected.

For example, referring to FIG. 6A, the processor 130 may set Korean as an input language based on the word ' 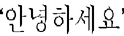 ' being received while the inclination of the first direction 601 of the portable device 100 is detected.

Similarly, referring to FIG. 6B, English may be set as the input language based on the word 'Hello' being received while the inclination of the second direction 651 of the portable device 100 in the second direction 651 is detected.

According to an embodiment of the present disclosure, specific words may be preset for respective languages that may be translated in the portable device 100.

According to an embodiment of the present disclosure, input languages and a list of preset words corresponding thereto may be displayed on the display unit 640.

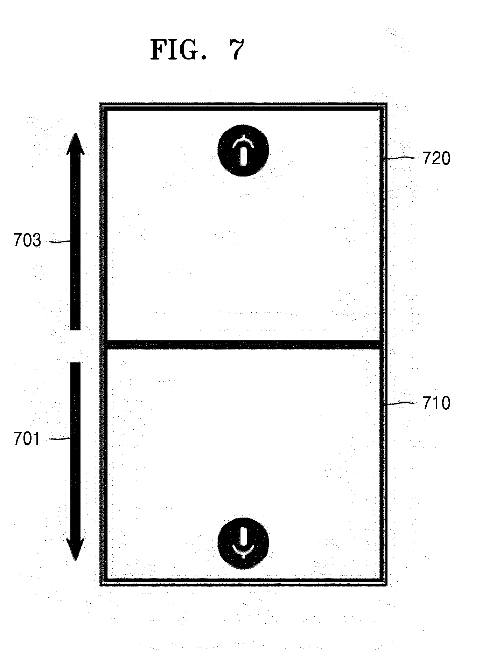

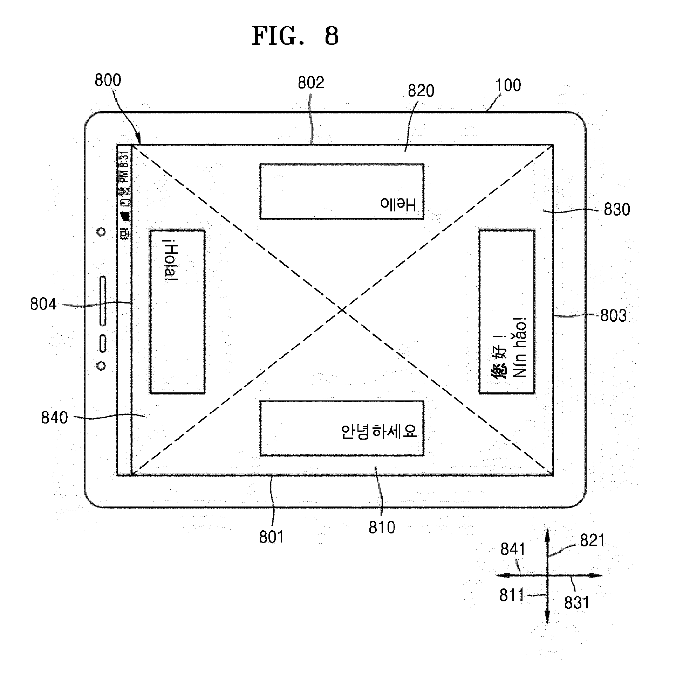

A plurality of divisional regions of a display unit, when a plurality of users use a translation function of the portable device 100, will be described in detail with reference to FIGS. 7 and 8 below.

FIG. 7 is a diagram illustrating a plurality of regions of a display unit of a portable device according to an embodiment of the present disclosure.

Referring to FIG. 7, the processor 130 may set a plurality of input languages based on the directions of a plurality of detected inclinations of a portable device. For example, as illustrated in FIG. 7, a first language may be set as an input language when the inclination of the portable device in a first direction 701 is detected, and a second language may be set as an input language when the inclination of the portable device in a second direction 703 is detected.

A method of setting each of the plurality of input languages is as described above with reference to FIGS. 1 to 6 and is thus not described again here.

The output unit 140 may include the divisional regions of the display unit, and the divisional regions may be regions of the display unit corresponding to the directions of a plurality of inclinations of the portable device.

For example, as illustrated in FIG. 7, a first region 710 may be biased toward the first direction 701 and a second region 720 may be biased toward the second direction 703 among the divisional regions of the display unit.

Upward and downward directions of a text displayed on each of the divisional regions may be determined based on the direction of the inclination corresponding to the region. The upward and downward directions of the texts displayed on the divisional regions are as described above with reference to FIG. 3 and are thus not described again here. FIG. 7 illustrates a case in which two divisional regions are present. In this case, the upward and downward directions of a text displayed on the first region 710 may be opposite those of a text displayed on the second region 720.

According to an embodiment of the present disclosure, a translation method for use in a portable device with two divisional regions is applicable to a case in which two users facing each other have a conversation as illustrated in FIG. 7. In this case, an input language and an output language may be changed based on the inclination of the portable device without manipulating buttons. Accordingly, the two users may freely have a conversation while using a translation function of the portable device.

FIG. 8 is a diagram illustrating a plurality of divisional regions of a display unit of a portable device according to an embodiment of the present disclosure.

Referring to FIG. 8, when the number of directions of a plurality of inclinations of the portable device 100 is four, the output unit 140 of FIG. 1 may include four divisional regions of a display unit 800 included in the output unit 140. The four divisional regions may include a first region 810, a second region 820, a third region 830, and a fourth region 840. The four regions illustrated in FIG. 8 are merely an example and thus various embodiments of the present disclosure are not limited thereto. For example, the four divisional regions may be four triangular regions of the display unit 800, as illustrated in FIG. 8, or may be four rectangular regions split from a region of the display unit 800, or may be any suitable and/or similar number and shape of regions. In the present embodiment of the present disclosure, the portable device 100 is applicable to a case in which a plurality of users who use Korean, English, Chinese, Spanish, etc. have a conversation as illustrated in FIG. 8.

As illustrated in FIG. 8, the first region 810, the second region 820, the third region 830, and the fourth region 840 correspond to a first direction 811, a second direction 821, a third direction 831, and a fourth direction 841, which are the directions of inclinations of the portable device 100.

Referring to FIG. 8, the first direction 811 is a direction when the portable device 100 is tilted such that a second end 802 of the portable device 100 is more distant from the ground than a first end 801 of the portable device 100, so that the display unit 800 may be disposed toward a user (not shown) adjacent to the first end 801.

Referring to FIG. 8, the second direction 821 is a direction when the portable device 100 is tilted such that the first end 801 of the portable device 100 is more distant from the ground than the second end 801 so that the display unit 800 may be disposed toward a user (not shown) adjacent to the second end 802.

Referring to FIG. 8, the third direction 831 is a direction when the portable device 100 is tilted such that a fourth end 804 of the portable device 100 is more distant from the ground than a third end 803 so that the display unit 800 may be disposed toward a user (not shown) adjacent to the third end 803.

Referring to FIG. 8, the fourth direction 841 is a direction when the portable device 100 is tilted such that the third end 803 of the portable device 100 is more distant from the ground than the fourth end 803 so that the display unit 800 may be disposed toward a user (not shown) adjacent to the fourth end 804.

As illustrated in FIG. 8, the processor 130 may set a first language, e.g., Korean as shown in FIG. 8, as an input language based on the first direction 811. Also, the processor 130 may set a second language, e.g., English as shown in FIG. 8, as an input language based on the second direction 821, set a third language, e.g., Chinese as shown in FIG. 8, as an input language based on the third direction 831, and set a fourth language, e.g., Spanish as shown in FIG. 8, as an input language based on the fourth direction 841. The input languages illustrated in FIG. 8 are, however, examples and various embodiments of the present disclosure are not limited thereto.

A method of setting each of the input languages is as described above with reference to FIGS. 1 to 6 and is thus not described again here.

Referring to FIG. 8, a text of ' 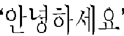 ', which is a user input in the input language set based on the first direction 811, i.e., Korean, is displayed on the first region 810.

Referring to FIG. 8, 'Hello', which is a result of translating ' 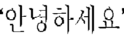 ', which is the user input that is input in Korean, into English among output languages may be displayed on the second region 820.

Referring to FIG. 8, ' 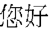 (Nín ho)', which is a result of translating ' 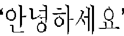 ', which is the user input that is input in Korean, into Chinese among the output languages may be displayed on the third region 830.

Referring to FIG. 8, '¡Hola!', which is a result of translating ' 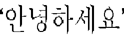 ', which is the user input that is input in Korean, into Spanish among the output languages may be displayed on the fourth region 840.

According to an embodiment of the present disclosure illustrated in FIG. 8, an input language may be easily changed based on the inclination of the portable device 100 even when users use three or more languages. At the same time, results of translating a user input into three or more output languages may be simultaneously displayed on a plurality of regions of a screen without individually translating and checking the three or more languages into corresponding output languages. Thus, all the users may have a conversation while viewing the results of translating the user input, which are displayed on the screen. Accordingly, according to the present embodiment of the present disclosure, users who use three or more language may freely have a conversation.

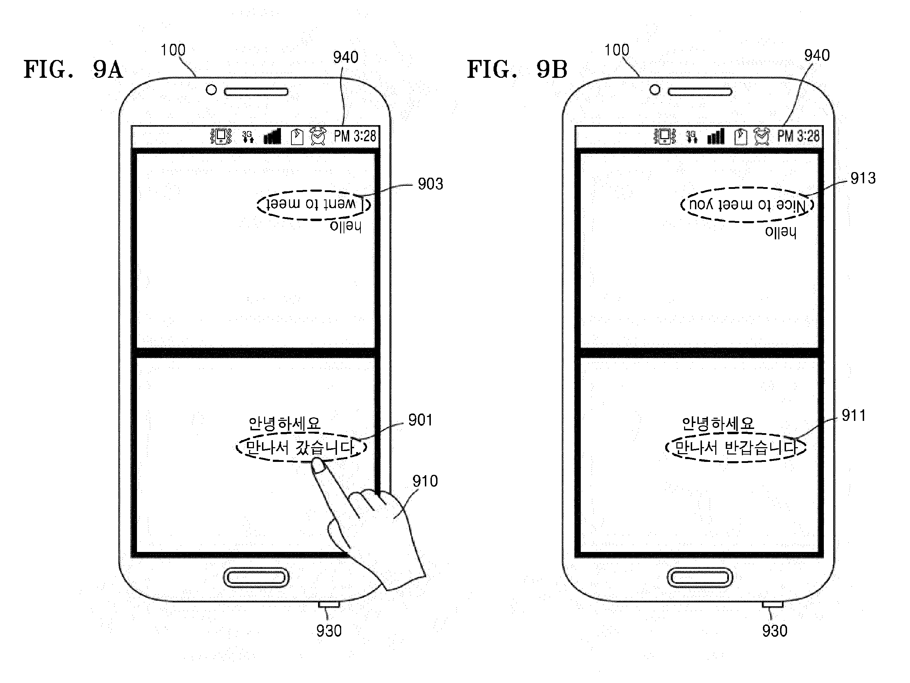

FIGS. 9A and 9B are diagrams illustrating a translation method for use in a portable device according to various embodiments of the present disclosure.

Referring to FIGS. 9A and 9B, an input language is Korean and an output language is English. According to an embodiment of the present disclosure, when a user input, which is voice, is erroneously recognized by a user input unit 930, a user may modify the user input.

FIG. 9A illustrates a text 901 of a user input that a user wishes to modify, and a text 903 which is a result of translating the text 901 of a user input into an output language. FIG. 9B illustrates a text 911 which is a result of modifying the user input, and a text 913 which is a result of translating the text 911 into the output language. When information for modifying the user input received in the input language is received, the processor 130 of FIG. 1 may translate the user input received in the input language again into the output language to reflect this information.

The output unit 140 of FIG. 1 may include a display unit 940 that may output the user input that is modified to reflect the information, and output the result of translating the modified user input into the output language.

Referring to FIG. 9A, the receiving of the information for modifying the user input may include receiving a touch input 910 via the user input receiver 120 and receiving the modified user input. For example, a user input ' 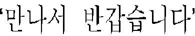 ', which is in the form of voice, may be erroneously recognized as ' 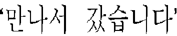 ' by the user input receiver 930, for example, a microphone in FIG. 9A. In this case, the user input recognized in the form of voice may be displayed as the text 901 of ' 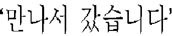 ' on the display unit 940. In this case, when ' 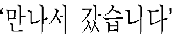 ', which is the user input, is to be modified to read ' 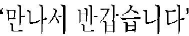 ', the text 901 of ' 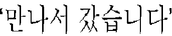 ' may be touched and modified.

According to an embodiment of the present disclosure, a user input may be modified by touching the text 901, and receiving, in the form of text, a result of modifying the user input via a GUI of a virtual keyboard on a touch screen. According to an embodiment of the present disclosure, the modified user input may be received by touching the text 901 and receiving the modified user input in the form of voice, but various embodiments of the present disclosure are not limited thereto.

When the information for modifying the user input is reflected into the text 901 of ' 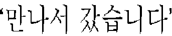 ', the user input may be modified and displayed as a text 911 of ' 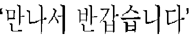 ' as illustrated in FIG. 9B.

As described above, when information for modifying a user input received in an input language is received, a result of modifying the user input is translated again by the processor 130.

Referring to FIG. 9A, the text 903 of 'I went to meet', which is the result of translating the text 901 of ' 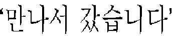 ', which is the result of erroneously receiving the user input 901, into an output language is displayed on the display unit 940.

As illustrated in FIG. 9B, a text 913 of 'Nice to meet you', which is the result of translating the modified user input into the output language, is displayed on the display unit 940 while a result of modifying the user input 901 into the text 911 of ' 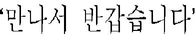 ', to reflect the information for modifying the user input 901, is displayed on the display unit 940.

FIGS. 9A and 9B illustrate a case in which a user input is erroneously recognized. However, a user may check a result of translating the user input, and modify the translation result when the translation result is wrong.

For example, the processor 130 may translate ' 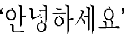 ', which is a Korean expression, into 'Apple'. In this case, the user may check the translation result in the form of text, and modify the text of 'Apple' into 'Hello'. A method of modifying the text of 'Apple' by a user is substantially the same as the method of modifying the text 901 of ' 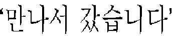 ' described above with reference to FIG. 9A and is not thus described again here.

When information for modifying the result of translating the user input into the output language is received, the processor 130 may reflect this information into the result of translating the user input into the output language, and the output unit 140 may output the result of translating the user input into the output language into which this information is reflected.

When information for modifying the result of translating the user input into the output language is received, the processor 130 may store information regarding the input language and the output language reflecting this information in a memory (not shown) to correspond to each other.

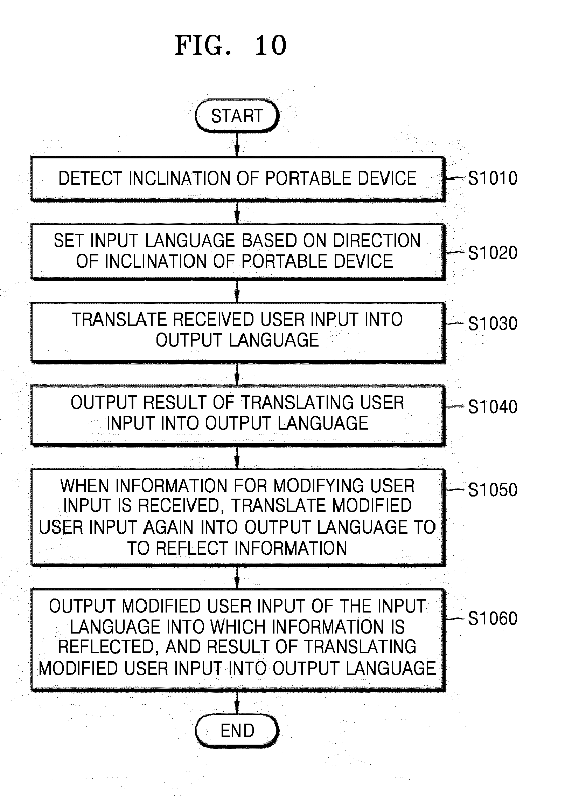

FIG. 10 is a flowchart of a translation method for use in a portable device according to an embodiment of the present disclosure.

Referring to FIG. 10, the translation method may be performed by the portable device 100 of FIG. 1.

In the translation method of FIG. 10 according to an embodiment of the present disclosure, the inclination detector 110 detects the inclination of the portable device 100 in operation S1010.

Next, the processor 130 sets an input language, based on the direction of the inclination of the portable device 100 detected in operation S1010, in operation S1020. Next, the processor 130 translates a user input received in the input language, via the user input receiver 120, into an output language in operation S1030.

Next, the output unit 140 outputs a result of translating the user input into the output language, as performed in operation S1030, in operation S1040.

Next, when information for modifying the user input is received, the processor 130 translates the modified user input received in the input language again into the output language to reflect this information in operation S1050. Here, the user input may include a user voice input.

Next, the output unit 140 outputs the modified user input of the input language and outputs the result of translating the modified user input into the output language, as performed in in operation S1050, in operation S1060.

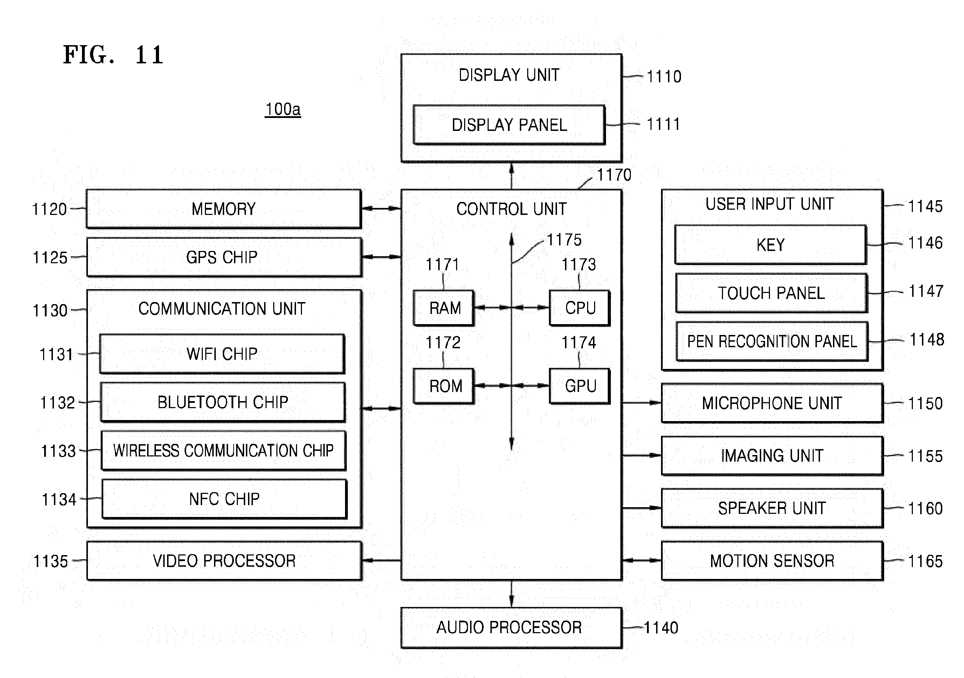

FIG. 11 is a block diagram of a portable device according to an embodiment of the present disclosure.

Referring to FIG. 11, a portable device 100a is applicable to various types of apparatuses, e.g., a mobile phone, a tablet PC, a personal digital assistant (PDA), a Motion Pictures Expert Group (MPEG) audio layer 3 (MP3) player, a kiosk, an electronic picture frame, a navigation device, a digital television (TV), a wearable device, such as a wrist watch or a head-mounted display (HMD), etc.

Referring to FIG. 11, the portable device 100a may include at least one among a display unit 1110, a control unit 1170, a memory 1120, a global positioning system (GPS) chip 1125, a communication unit 1130, a video processor 1135, an audio processor 1140, a user input unit 1145, a microphone unit 1150, an imaging unit 1155, a speaker unit 1160, and a motion sensor 1165.

The display unit 1110 may include a display panel 1111, and a controller (not shown) for controlling the display panel 1111. The display panel 1111 may be embodied as various types of displays, such as a liquid crystal display (LCD), an organic light-emitting diode (OLED) display, an active-matrix OLED (AM-OLED), a plasma display panel (PDP), etc. The display panel 1111 may be manufactured to be flexible, transparent, or wearable. The display unit 1110 may be combined with a touch panel 1147 of the user input unit 1145 to form a touch screen (not shown). For example, the touch screen may be an all-in-one module in which the display panel 1111 and the touch panel 1147 are combined in a stacked structure.

The memory 1120 may include at least one of an internal memory (not shown) and an external memory (not shown).

The internal memory may include, for example, at least one among a volatile memory, e.g., a random access memory (RAM), a dynamic RAM (DRAM), a static RAM (SRAM), a synchronous DRAM (SDRAM), etc., a nonvolatile memory, e.g., a read-only memory (ROM), a one-time programmable ROM (OTPROM), a programmable ROM (PROM), an erasable and programmable ROM (EPROM), an electrically erasable and programmable ROM (EEPROM), a mask ROM, a flash ROM, etc., a hard disc drive (HDD), and a solid-state drive (SSD). According to an embodiment of the present disclosure, the control unit 1170 may process a command or data received from at least one among the nonvolatile memory and other components by loading the command or data to the volatile memory. Also, the control unit 1170 may store data received from another component or generated data in the nonvolatile memory.

The external memory may include, for example, at least one among a compact flash (CF), a secure digital (SD), a micro-SD, a mini-SD, an extreme digital (xD), and a memory stick.

The memory 1120 may store various programs and data for operating the portable device 100a. For example, the memory 1120 may temporarily or semi-permanently store at least a portion of contents to be displayed in a lock screen.

The control unit 1170 may control the display unit 1110 to display some contents stored in the memory 1120. In other words, the control unit 1170 may display some contents stored in the memory 1120 on the display unit 1110. Otherwise, when a user gesture is performed on a region of the display unit 1110, the control unit 1170 may perform a control operation corresponding to the user gesture.

The control unit 1170 may include at least one among a RAM 1171, a ROM 1172, a central processing unit (CPU) 1173, a graphics processing unit (GPU) 1174, and a bus 1175. The RAM 1171, the ROM 1172, the CPU 1173, the GPU 1174, and the like may be connected to one another via the bus 1175.

The CPU 1173 performs system booting using an operating system (O/S) stored in the memory 1120 by accessing the memory 1120. Also, the CPU 1173 performs various operations using various programs, contents, data, etc. stored in the memory 1120.

The ROM 1172 stores a command set, etc. for booting the system. For example, when a turn-on command is input to the portable device 100a to supply power thereto, the CPU 1173 may copy the O/S stored in the memory 1120 to the RAM 1171 and run the O/S to boot the system according to a command stored in the ROM 1172. When the booting of the system is completed, the CPU 1173 copies various programs stored in the memory 1120 to the RAM 1171, and runs the various programs copied to the RAM 1171 to perform various operations. When the booting of the portable device 100a is completed, the GPU 1174 displays a UI screen on a region of the display unit 1110. In detail, the GPU 1174 may create a screen displaying an electronic document including various objects, such as contents, icons, a menu, etc. The GPU 1174 calculates attribute values, such as coordinates, shapes, sizes, and colors, in which the objects are displayed according to the layout of the screen. Also, the GPU 1174 may create screens with various layouts including the objects, based on the calculated attribute values. The screens created by the GPU 1174 may be provided to the display unit 1110 to be displayed on regions of the display unit 1110, respectively.

The GPS chip 1125 may receive a GPS signal from a GPS satellite, and calculate a current position of the portable device 100a. The control unit 1170 may calculate a current position of a user by using the GPS chip 1125 when a navigation program is used or when the current position of the user is needed.

The communication unit 1130 may communicate with various types of external devices according to various communication methods. The communication unit 1130 may include at least one among a Wi-Fi chip 1131, a Bluetooth chip 1132, a wireless communication chip 1133, and a near-field communication (NFC) chip 1134. The control unit 1170 may communicate with various types of external devices via the communication unit 1130.

The Wi-Fi chip 1131 and the Bluetooth chip 1132 may establish communication according to a Wi-Fi method and a Bluetooth method, respectively. When the Wi-Fi chip 1131 or the Bluetooth chip 1132 is used, various connection information, such as a service set identifier (SSID), a session key, etc., may be transmitted/received and then communication may be established based on the various connection information to transmit/receive various information. The wireless communication chip 1133 may be a chip for establishing communication according to various communication standards, such as Institute of Electrical and Electronics Engineers (IEEE) standards, zigbee, 3rd Generation Partnership Project (3GPP) standards , Long-Term (LTE), etc. The NFC chip 1134 should be understood as a chip operating according to an NFC method using a frequency band of 13.56 MHz among various radio-frequency identification (RF-ID) frequency bands, e.g., 135 kHz, 13.56 MHz, 433 MHz, 860 to 960 MHz, 2.45 GHz, etc.

The video processor 1135 may process video data contained in contents received via the communication unit 1130 or contents stored in the memory 1120. The video processor 1135 may perform various image processing operations, e.g., decoding, scaling, noise filtering, frame rate conversion, resolution conversion, etc., on the video data.

The audio processor 1140 may process audio data contained in contents received via the communication unit 1130 or contents stored in the memory 1120. The audio processor 1140 may perform various processing operations, e.g., decoding, amplification, noise filtering, etc., on the audio data.

When executing a program for reproducing a multimedia content, the control unit 1170 may drive the video processor 1135 and the audio processor 1140 to reproduce the multimedia content. The speaker unit 1160 may output audio data generated by the audio processor 1140.

Various commands may be input from a user via the user input unit 1145. The user input unit 1145 may include at least one among a key 1146, a touch panel 1147, and a pen recognition panel 1148.

The key 1146 may include various types of keys, such as mechanical buttons, wheels, etc., formed on various regions, e.g., a front surface, a side surface, a rear surface, etc., of the exterior of a main body of the portable device 100a.

The touch panel 1147 may sense a touch input performed by a user, and output a touch event value corresponding to the sensed touch input. When the touch panel 1147 is combined with the display panel 1111 to form a touch screen (not shown), the touch screen may be embodied as various types of touch sensors such as an electrostatic touch sensor, a pressure-sensitive touch sensor, a piezoelectric touch sensor, etc. The electrostatic touch sensor employs a method of sensing micro-electricity generated when a surface of the touch screen is touched by a user's body and calculating the coordinates of a touched point by using a dielectric coated on the surface of the touch screen. The pressure-sensitive touch sensor includes two upper and lower electrode plates embedded therein, and may sense electric current flowing when a user touches a screen of the touch sensor and the two upper and lower electrode plates thus contact each other at a touched position, and calculate the coordinates of the touched position. A touch event generated by the touch screen may be generally generated with a user's finger, or may be generated using an object formed of a conductive material causing a change in an electrostatic capacitance.

The pen recognition panel 1148 may sense a proximity input or a touch input performed using a user's touch pen, e.g., a stylus pen, a digitizer pen, etc., and output an event based on the sensed proximity input or touch input. The pen recognition panel 1148 may be embodied, for example, according to an electromagnetic radiation (EMR) method, and may sense a touch input or a proximity input based on a change in the intensity of an electromagnetic field generated when a pen approaches the pen recognition panel 1148 or when the pen recognition panel 1248 is touched by the pen. In detail, although not shown, the pen recognition panel 1148 may include a grid-type electromagnetic induction coil sensor, and an electronic signal processor that sequentially provides an alternate-current signal having a predetermined frequency to loop coils of the electromagnetic induction coil sensor. When a pen including a resonance circuit therein approaches a loop coil of the pen recognition panel 1248, a magnetic field transmitted from the loop coil generates electric current in the resonance circuit, based on mutual electromagnetic induction. An induction magnetic field may be generated from a loop coil of the resonance circuit, based on the electric current, and the pen recognition panel 1148 may detect the induction magnetic field from the loop coil that is in a signal reception state, thereby sensing a position accessed or touched by the pen. The pen recognition panel 1148 may be provided to occupy a predetermined area of the bottom of the display panel 1211, e.g., an area covering a display region of the display panel 1211.

The microphone unit 1150 may receive a user's voice or other sound and convert it into audio data. The control unit 1170 may use the user's voice received via the microphone unit 1150 in a calling operation, or may convert the user's voice into audio data and store the audio data in the memory 1120.

The imaging unit 1155 may capture a still image or video under control of a user. The imaging unit 1155 may include a plurality of cameras (not shown), e.g., a front camera and a rear camera.

When the imaging unit 1155 and the microphone unit 1150 are prepared, e.g., are activated, the control unit 1170 may perform a control operation according to a user's voice received via the microphone unit 1150 or the user's motion recognized by the imaging unit 1155. For example, the portable device 100a may operate in a motion-controlled mode or a voice-controlled mode. When the portable device 100a operates in the motion-controlled mode, the control unit 1170 may activate the imaging unit 1155 to photograph a user, trace a change in the user's motion, and perform a control operation corresponding to the change in the user's motion. When the portable device 100a operates in the voice-controlled mode, the control unit 1170 may operate in a voice recognition mode to analyze the user's voice input via the microphone unit 1150 and perform a control operation according to the analyzed user's voice.

The motion sensor 1165 may sense a motion of the body of the portable device 100a. The portable device 100a may rotate or be tilted in various directions. In this case, the motion sensor 1165 may sense characteristics of the user's motion such as the direction, angle, inclination and the like, of rotation by using at least one among various sensors such as a geomagnetic sensor, a gyro sensor, and an acceleration sensor.

Although not shown in FIG. 11, according to an embodiment of the present disclosure, the portable device 100a may further include a universal serial bus (USB) port to which a USB connector is connected, various external input ports to which various external terminals such as a headset, a mouse, a local area network (LAN), etc., are connected, a digital multimedia broadcasting (DMB) chip for receiving and processing a DMB signal, various sensors, etc.

The names of the components of the portable device 100a described above may be changed. Also, the portable device 100a described in the present disclosure may include at least one among the components described above, some of the above components may be omitted, or additional components may be further included in the portable device 100a.

According to an embodiment of the present disclosure, the output unit 140 may include the display unit 1110 of FIG. 11. According to an embodiment of the present disclosure, the processor 130 may correspond to the control unit 1170 of FIG. 11. According to an embodiment of the present disclosure, the user input receiver 120 may correspond to the user input unit 1145 of FIG. 11. An embodiment of the present disclosure may be embodied in the form of a computer-readable recording medium that stores commands that can be executed by a computer, e.g., a program module that can be run by a computer. The computer-readable recording medium may be an arbitrary available medium that is accessible by a computer, and includes a volatile medium, a nonvolatile medium, a separable medium, and a non-separable medium. Also, the computer-readable recording medium may include a computer storage medium and a communication medium. The computer storage medium may include a volatile medium, a nonvolatile medium, a separable medium, and a non-separable medium embodied according to an arbitrary method or technology to store information such as computer-readable commands, data structures, program modules, or other data. Typical examples of the communication medium include a mechanism for transmitting a computer-readable command, a data structure, a program module, a modulated data signal such as a carrier wave, and other data, and an arbitrary information transmission medium.

As described above, according to the one or more of the above various embodiments of the present disclosure, a language which is a translation target may be easily set in order to conveniently use an automatic translation function.

In particular, according to the above one or more of the above various embodiments of the present disclosure, an input language and an output language may be changed using the inclination of a portable device without manipulating buttons while users who use a plurality of languages have a conversation. Thus, users may freely have a conversation while using a translation function. Also, according to an embodiment of the present disclosure, an input language may be easily changed using the inclination of the portable device even when users use three or more languages. At the same time, a conversation among the users who use three or more languages may be easily translated on divisional regions of a screen.

Also, according to an embodiment of the present disclosure, all users may have a conversation while simultaneously viewing a result displayed on a screen.

The one or more of the above various embodiments of the present disclosure are provided for a better understanding of the present disclosure, and it would be obvious to those of ordinary skill in the art that the present disclosure may be embodied in many different forms without departing from the technical idea or essential characteristics of the present disclosure. Thus, the various embodiments of the present disclosure should be considered in descriptive sense only and not for purposes of limitation. For example, components that have been described as being included in a single form may be embodied in a distributed form. Similarly, components that have been described as being distributed may be embodied in a combined form.

The scope of the present disclosure is defined not by the detailed description of the present disclosure but by the appended claims, and all differences within the scope will be construed as being included in the present disclosure.

While the present disclosure has been shown and described with reference to various embodiments thereof, it will be understood by those skilled in the art that various changes in form and details may be made therein without departing from the spirit and scope of the present disclosure as defined by the appended claims and their equivalents.

## Claims

1. A portable device comprising:
an inclination detector configured to detect an inclination of the portable device;
a user input receiver configured to receive a user input;
a processor configured to:
set an input language based on a direction of the inclination of the portable device; and
translate the user input into an output language; and
an output unit configured to output a result of translating the user input into the output language.

2. The portable device of claim 1,
wherein the processor is further configured to:
detect an inclination of the portable device in a first direction; and
set a first language as the input language based on the inclination of the portable device in the first direction, and
wherein the output unit is further configured to display, in the form of text, a user input received in the first language and a result of translation into the first language on a first region of a display unit,
wherein the first region is a region of the display unit corresponding to the first direction.

3. The portable device of claim 2, wherein the output unit is further configured to determine an upward direction and a downward direction of the text displayed on the first region based on the first direction.

4. The portable device of claim 1, wherein a direction of an inclination corresponding to the input language corresponds to a direction in which a display unit of the portable device faces a user who inputs the input language.

5. The portable device of claim 1,
wherein the processor is further configured to set a plurality of input languages based on directions of a plurality of detected inclinations,
wherein the output unit comprises a plurality of divisional regions of a display unit,
wherein the plurality of divisional regions correspond to regions of the display unit corresponding to the directions of the plurality of the detected inclinations, and
wherein an upward direction and a downward direction of each of texts displayed on a respective one of the plurality of divisional regions of the display unit are determined based on a direction of an inclination corresponding to the region.

6. The portable device of claim 5,
wherein the directions of the plurality of detected inclinations comprise a first direction and a second direction,
wherein the output unit comprises a first divisional region corresponding to the first direction and a second divisional region corresponding to the second direction, and
wherein an upward direction and a downward direction of a text displayed on the first divisional region are opposite to an upward direction and a downward direction of a text displayed on the second divisional region.

7. The portable device of claim 5, wherein the processor is further configured to determine a number of the directions of the plurality of detected inclinations.

8. The portable device of claim 5, wherein the output unit comprises four divisional regions of the display unit when the number of the directions of the plurality of detected inclinations is four.

9. A translation method for use in a portable device, the translation method comprising:
detecting an inclination of the portable device;
setting an input language based on a direction of the inclination of the portable device;
translating a user input received via a user input receiver into an output language; and
outputting a result of translating the user input into the output language to an output unit.

10. The translation method of claim 9,
wherein the setting of the input language comprises setting a first language as the input language when an inclination of the portable device in a first direction is detected,
wherein the outputting of the result of translating the user input into the output language comprises displaying, in the form of text, a user input received in the first language and a result of translation into the first language on a first region of a display unit, and
wherein the first region is a region of the display unit corresponding to the first direction.

11. The translation method of claim 10, wherein an upward direction and a downward direction of the text displayed on the first region are determined based on the first direction.

12. The translation method of claim 9, wherein a direction of an inclination corresponding to the input language corresponds to a direction in which a display unit of the portable device faces a user who inputs the input language.

13. The translation method of claim 9,
wherein the setting of the input language comprises:
setting a plurality of input languages based on directions of a plurality of detected inclinations, and
dividing the output unit into a plurality of divisional regions of a display unit,
wherein the plurality of divisional regions correspond to regions of the display unit corresponding to the directions of the plurality of the detected inclinations, and
wherein an upward direction and a downward direction of each of texts displayed on respective ones of the plurality of divisional regions of the display unit are determined based on a direction of an inclination corresponding to the divisional region.

14. The translation method of claim 9, further comprising:
when information for modifying a user input received in the input language is received, translating the user input received in the input language again into the output language to reflect the information; and
outputting the user input of the input language in which the information is reflected, and a result of translating the user input again into the output language, and
wherein the user input comprises a user voice input.

15. The translation method of claim 9, wherein the setting of the input language comprises setting the input language based on a predetermined input word received while the inclination of the portable device in the first direction is detected.
